# EUROPEAN PATENT APPLICATION

(11) **EP 2 639 693 A1**
(43) Date of publication of application: **18.09.2013**
(21) Application number: 13158763.6
(22) Date of filing: 12.03.2013
(51) Int. Cl.: G06F 9/44

(54) **Business management system**

(30) Priority: 12.03.2012 SE 1250230; 28.09.2012 EP 12186624
(71) Applicant: Barium AB, 411 17 Göteborg (SE)
(72) Inventor: CAESAR, Fredrik, 438 34 LANDVETTER (SE); NILSSON, Peter, 448 34 FLODA (SE); HANSSON, Torbjörn, 431 46 MÖLNDAL (SE)
(74) Representative: Kitzler, Michael

(57) **Abstract**

A method, system and computer program product of managing an executable process application based on a BPMN process model, comprising: Receiving a BPMN process model; Parsing the process model to an process model object graph; Validating the process model dependent on a predetermined set of validation rules; Identifying start events in the process model; Providing an event handler for each start event based on a start event trigger comprised in the process model; Generating an executable process application based on the process model object graph.

## Description

### TECHNICAL FIELD

The present invention relates generally to model-driven process management in a cloud based business process management system (BPMS).

More particularly, the present invention relates to a system for generating, modifying, and executing a process related application supporting process management based on a process model.

### BACKGROUND

Business Process Management (BPM) tools allow users to model, execute, and monitor their business processes based on a common process model. Business Process Model and Notation (BPMN) is an industry standard graphic notation for representing business process workflows. BPMN shows the end-to-end flow of a business process in a flowchart-type style, and is often used with a user-interface-oriented BPMN tool.

One example of a BPMN tool is Barium's product *Barium Live,* which is designed to help users with process management. With *Barium Live,* users can compose process steps, define business rules and exceptions, model process flows using BPMN, execute process models efficiently, and support interaction with running processes via personalized graphical user interfaces or spaces, presented on a user terminal such as e.g. a PC, a PDA or a smart phone.

However, as the task of translating the modeled process flow to an executable process is technically very complex and there still exists a need for simplifying the business process management and making the tool more intuitive for a non-developer or other person without extensive technical competence or insight into process management systems. Further, there is also a need for a tool that saves time and manual work when implementing an application for a new or a modified process model.

### RELATED ART

Further examples of related art are found in the patent publications:
US20110106724A1 discusses a system and method for using an inheritance hierarchy in a metamodel as a manual for a tool on how to refine model entities based on the metamodel definition. This information provides a generic functionality in the modeling infrastructure that rapidly adjusts diagram elements (e.g. of a BPMN tool) based on a given metamodel definition.
WO2010054062A2 describes a method on how a business model can be visualized.
US20100057482 A1 describes a method for merging business process modeling notation model and business process execution language model.
WO 01/071621 describes a method for defining a process model, providing support for manually designing user interface and presenting individual tasks using the manually designed user interface to a user.

### OBJECT OF THE INVENTION

The object of the invention relates to generating, modifying, and executing a process related application supporting process management based on a process model. In particular reducing delays from when the process model is changed to when the business to when the built executable process model application can be executed. In addition it is directed towards addition reducing error sources when translating the business process model to an executable business model application.

### SUMMARY

The present invention according to different aspects provides a system and a method for generating executable process-driven applications (process apps) from BPMN process models.

According to embodiments, the method further comprises, and the system is further arranged to, interpreting and running BPMN process models as instances of a process application also referred to as process instances, wherein a process instance represents each unique end-to-end execution of a process model in a process application.

According to a further embodiment, there is provided software support for the method which makes it possible for non-developers or other persons who do not have extensive technical competence or insight into process management systems to apply the method and create process applications based on their created or modified process models without the need for development or conversion to an executable format, both of which can lead to loss of details and other conversion problems.

Embodiments of the invention further comprise a computer program product of managing an executable process application based on a BPMN process model, comprising computer program code portions adapted to control a processor to perform the steps and functions of the method or the system.

### BRIEF DESCRIPTION OF DRAWINGS

The present invention will be further explained by means of exemplifying embodiments and with reference to the accompanying drawings, in which:
Fig. 1 shows a schematic view of a computer implemented system of managing an executable process application according to an embodiment.
Fig. 2 is a flow diagram showing process management steps according to an embodiment.
Fig. 3 shows data coupled to the process management steps of Fig. 2.
Fig. 4 shows a schematic view of a computer implemented system of managing an executable process application according to an embodiment.
Fig. 5a shows a schematic view of a system embodiment comprising an integration agent.
Fig. 5b shows a detailed schematic view of a part of the system in Fig. 5a, according to an embodiment.
Fig. 6 shows a schematic view of a process management method according to an embodiment.
Fig. 7 shows a schematic view of interaction between system units of a computer implemented system of managing an executable process application, according to embodiments.
Fig. 8 is a flow diagram showing an interpretation flow according to embodiments.

### DETAILED DESCRIPTION

### Introduction

In prior art systems, when employing a Business Process Management (BPM) tool, generally involves:
- the step of modeling a business process, or in other words create a business process model or a map
- the step of building or generating an executable business process application; and
- the step of running or executing the executable business process application.

In order to generate an executable business process model in prior art methods in most cases involves that the business process model have to be built by translating it into computer object models and thereafter computer program code portions, configured to direct a processor to perform the modeled steps, by highly skilled technical persons. This leads to large delays when the business process model is changed to when it can be executed. In addition error sources are introduced when translating the business process model to an executable business model application comprising of computer program code portions.

### Modeling a business process

In one or more embodiments the modeling step is performed by applying a graphic notation for representing business process workflows, such as Business Process Model and Notation (BPMN), e.g. in a in a Business Process Management tool. BPMN, which as explained in the background section is a specific example of an industry standard, provides a mapping between the graphics of the notation and the underlying constructs of execution languages. BPMN provides a standard notation readily understandable by all roles in a business, such as business analysts, the technical developers, and the business managers thereby bridging the communication gap that frequently occurs between business process design and business process build. The main elements of the graphical notation for specifying business processes, such as BPMN; are flow objects, connecting objects, swim lanes and artifacts. Examples of flow objects are events, activities, gateways. Examples of connecting objects are sequence flow, message flow and association. Examples of swim lanes are pool and lane. Examples of artifacts are data object, group and annotation.

### Building or creating an executable business process model

In one or more embodiments the build or create step involves receiving a control signal, e.g. via an application programming interface (API). In one or more embodiments the build step involves the received control signal triggering fetching or retrieving a modeled process model from a model repository. In one or more embodiments the build step involves parsing the modeled process model to a process model object graph, wherein the process model object graph provides a machine-interpretable representation of the complete end-to-end business process described in the modeled process model including sub-processes. In one or more embodiments the build step involves building an executable business process model on a subset of the modeled process model, wherein the subset is based on the graphical notation elements, e.g. only flow objects, connecting objects and swim lanes. In one or more embodiments, the process application is executed as native BPMN, meaning that no interpretation by intermediate applications, hardware or software is needed. In one or more embodiments the process model is interpreted continuously by a process engine through processing a process model object graph

In one embodiment a process model object graph is a machine-interpretable representation of a complete end-to-end business process model, including sub processes. A process model object graph contains objects and object collections representing business process model symbols, including flow objects and sequence flows. Each object in the process model object graph comprises attributes that may be used by the process engine when running a process instance.

In one or more embodiments the build or create step involves validating the modeled process model against a set of predefined validation rules. In one or more embodiments the build or create step involves validating the process model object graph of the modeled process model against a set of predefined validation rules. In one example the set of predefined validation rules comprises verifying the existence of at least one start event, the existence of at least one process participant and/or that all flow objects involving user interaction has at least one participant configured.

In one or more embodiments the build or create step involves to, upon successful validation of the modeled process model against a set of predefined validation rules, identify objects in the process model object graph corresponds to the start events in the graphical notation of the process model also referred to as start event objects, e.g. by a process engine, 703.

In one or more embodiments the build or create step involves registering event handlers for each start event based on the respective start event trigger, wherein event handlers are triggered by one of a message, timers, rule evaluators manual events, such as user indications in a graphical user interface or any other trigger known to a person skilled in the art.

In one or more embodiments the build or create step involves starting execution of an instance of a process application 407 also referred to as process instance. In one or more embodiments the build or create step involves activating registered event handlers for all identified start events.

In one or more embodiments the build or create step involves mapping explicit users and/or user groups to all different process participants, or process roles. In one or more embodiments the mapping is based on a configuration in the process application that exactly describes which users and/or user groups that can act as a specific process participant.

In one or more embodiments the build or create step involves mapping process-aware form templates, also referred to as process-aware object templates, to data objects in the process model that are loaded into the object graph. In one example the process-aware form templates is used to provide a user interface for users to create, view, update and delete structured data in process instances, e.g. by a process engine 703. In one or more embodiments, the mapping is based on a configuration in the process application that exactly describes which form or object templates that shall be used when creating and/or updating a data object in the process model.

In one or more embodiments, wherein a process-aware form or object template is a template that can use contextual information about in which process step or steps, e.g. object in the process model object graph, a form is used, determined by one of:
- a token
- which user is using the form
- which state the form is in
- determined by the state property on the form data object
- which view mode the form should be displayed in in the current process step and/or which other data objects exist in the process instance.

In one or more embodiments execution is performed by interpreting the parsed process model object graph continuously. In one or more embodiments the parsed process model object graph is interpreted by a process engine 703.

In one or more embodiments the run or execute executable process application step involves detecting that an activated start event of an instance of a process application is triggered. In one or more embodiments wherein run or execute involves a process engine 703 interpreting the parsed process model object graph by evaluating each object in the process model object graph as an on-going process execution thread. In one or more embodiments interpreting the parsed process model object graph involves creating a token and associating said token with a current object or current active work item 326 in the interpreted process model object graph, wherein the current object in the process model object graph corresponds to the triggered start event in the graphical notation of the process model.

A token represents a thread of activity that logically flows or moves through a process model, from a start event to an end event when a process instance is executed. The token travels or moves from a start event, passes sequence flows and flow objects and is eventually consumed by an end event. The token carries a reference to the current sequence flow or flow object, indicating the current work item and logical location. The token may leave a flow object directly or remain there until an event occurs, depending of the type and configuration attributes of the flow object. The token may be split into several tokens when leaving a flow object and may be merged with other tokens, depending of the type and configuration attributes of the flow object that the token is logically located on. When the token logically reaches a flow object, a work item may be generated that may comprise a user interface, depending of the type and configuration attributes of the flow object.

In one or more embodiments the run or execute executable process application step involves after processing the current object to associating the token to the next object in the process model object graph, wherein the next successive object is linked to the current object in the process model object graph. In one embodiment wherein the current object is a gateway object, corresponding to a gateway element in the in the graphical notation of the process model, and associating the token to the next object involves generating additional tokens and associating them with successive objects in the process model object graph all linked to the current object. In one embodiment wherein the current object is a gateway object, corresponding to a gateway element in the, corresponding to a gateway in the graphical notation of the process model, involves being associated with multiple tokens and merging them to one token and associating the token to the next object in the process model object graph.

In one example the current object is corresponding to an activity element in the graphical notation of the process model which is connected to a next activity by a connection element. After finishing evaluating the current object as an on-going process execution thread the token would be configured to be associated with the next activity, whereupon the next activity would be evaluated as the current object as an on-going process execution thread.

In one or more embodiments the run or execute executable process application step involves executing the instance of a process application 407 until the token is associated with an object corresponding to an end event element in the in the graphical notation of the process model

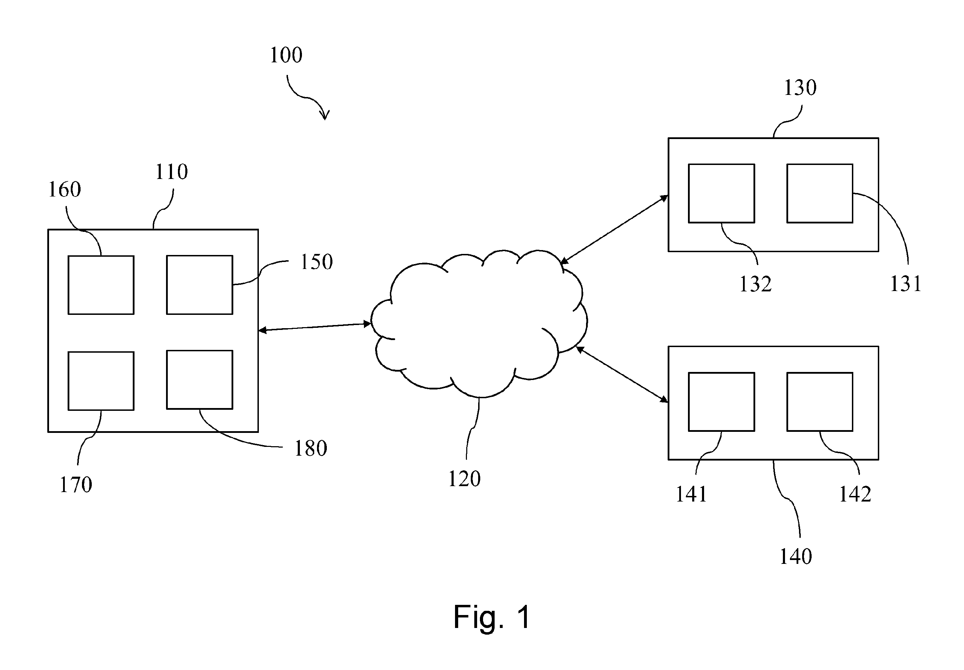

Fig. 1 shows a schematic view of a computer implemented system 100 of managing an executable process application.

According to an embodiment, the system shown in Fig. 1 is a computer implemented system 100 of managing an executable process application based on a BPMN process model, comprising a process server 110 provided with a user interface, typically a graphical user interface that is displayed to a user on a display 150 integrated in or coupled to the process server 110. According to an embodiment, the user interface is adapted for inputting a BPMN process model. According to an embodiment, the BPMN process model is created by a user using one or more interaction, or input, device 180 that may comprise a selection of a keyboard, soft buttons and/or touch screen input devices and input to the process server in response to a control signal indicating that a process model has been created, for instance generated by a user interacting with the interaction devices 180. The user interface on the server side may, as mentioned, also be coupled to the server, for example via a link or data communications network, such that the server functions are remotely operable.

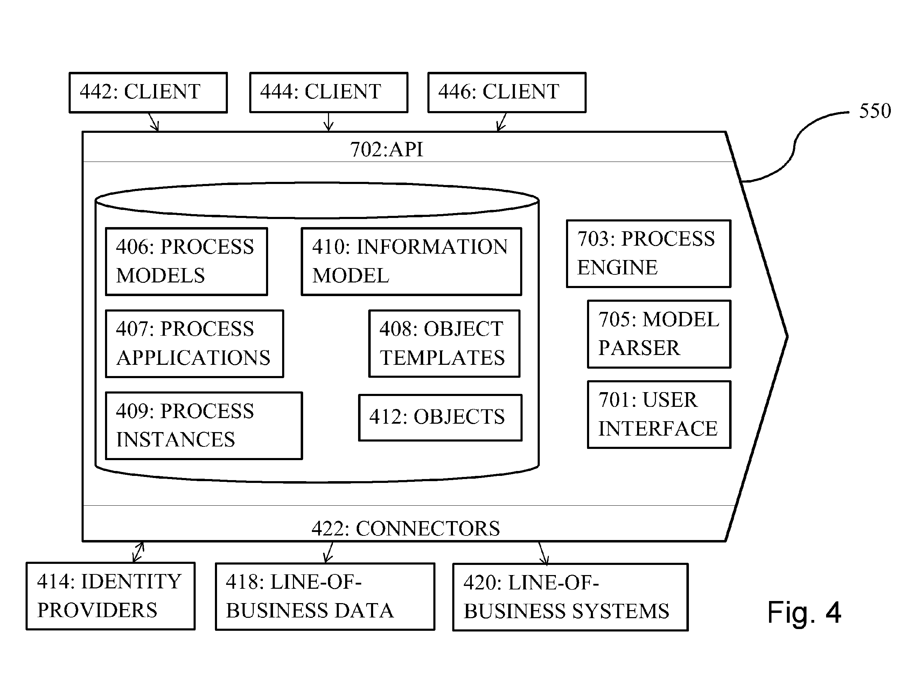

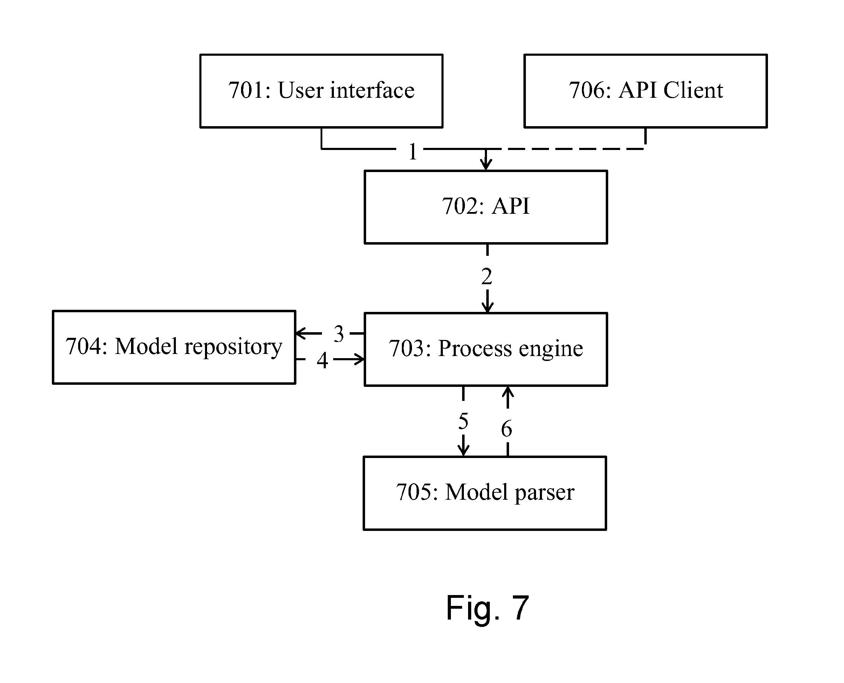

According to an embodiment, the process server 110 comprises a processor 160, the processor 160 in turn comprising logic or computer code portions in the form of a process engine, corresponding to the process engine 703 further presented in connection with Figs. 4 and 7, adapted to receive a BPMN process model, parse the process model to an process model object graph, validate the process model or the corresponding process model object graph dependent on a predetermined set of validation rules, identify start events in the process model, provide an event handler for each start event based on a start event trigger comprised in the process model and generate an executable process application based on the process model object graph. According to an embodiment, the predetermined set of validation rules, as well as the generated process model, may be stored in and retrieved from a memory 170 of the process server 110.

According to an embodiment, the process engine is further adapted to create an executable process instance based on a subset of the process model in response to triggering of a start event.

According to an embodiment, the process engine is adapted to execute said process instance until an end event in the associated process model object graph is reached.

According to an embodiment, the process engine is adapted to provide the process instance to comprise more than one on-going thread of execution and execute each thread until a respective end event is reached.

According to embodiments shown in Fig. 1, computer implemented system 100 further comprises local units 130, 140, wherein the process server 110 is adapted to communicate with local units 130, 140 via a communication network 120, for instance the internet, a wide area network (WAN) or a local area network (LAN). Thereby, the system 100 is adapted to provide cloud based process management of an executable process application to local users using local units 130, 140. A local unit may for instance be in the form of a personal computer, a handheld mobile device, a personal digital assistant or any other suitable user terminal comprising a display 132, 142 adapted to display a graphical user interface and one or more interaction, on input, devices 131, 141 that may comprise a selection of a keyboard, soft buttons and/or touch screen input devices. In Fig. 1, two local units are shown by means of example only. Any number of local units may be connected to the process server 110 via the network 120, thereby providing great scalability to the system 100.

According to an embodiment, the generated application may be realized on several different types of platforms, for example mobile telephone platforms, personal computers, or via email or other relevant applications.

For the purpose of interacting with a user via a local unit, the process engine is further adapted to generate a graphical user interface that is displayed on a local unit to present information to a user and receive control commands from the user in communication via a data communications network.

According to embodiments, the processor 160 is further arranged to perform the methods of any, all, or a selection of the embodiments described below. In an embodiment, the processor 160 corresponds to the process engine 703 described in connection with Figs. 4 and 7.

### Map to App

In some related process management applications on the market there are provided applications that represent process applications. However, if the process model that the process application is based on is modified or updated, information in the process application is not automatically updated. Extensive manual labor and manual input is therefore required in order to achieve corresponding changes of the application. Thus in prior art, thereby a significant delay is introduced from the re-modeling of a previously modeled business process model to the time when the executable business process model reflects the change.

This problem is solved according to methods and systems presented herein, wherein generation and/or modification of applications based on generation and/or modification of process models is performed without any, or requiring very little, manual input.

According to embodiments of the present invention, there is provided a computer implemented method of managing an executable process application based on a BPMN process model, comprising:
- receiving a BPMN process model;
- parsing the process model to an process model object graph, wherein the process model object graph provides a machine-interpretable representation of the complete end-to-end business process described in the BPMN process including sub-processes;- validating the process model dependent on a predetermined set of validation rules;
- identifying start events in the process model object graph corresponding to the process model;
- providing an event handler for each start in the process model object graph, corresponding to a start event in the in the graphical notation of the process model, based on a start event trigger comprised in the process model; and
- generating an executable process application based on the process model object graph.

Thereby, an executable process application is achieved based on a process model, or in other words: the concept of "map to app" is realized.

According to an embodiment, the method comprises generating a control signal in response to an identified triggering of a start event and generating an executable process application in response to receiving the control signal.

According to an embodiment, a process instance based on a subset of the process model is created in response to triggering of a start event in a process application. According to an embodiment, a process application comprises at least one process model and configuration data relating to the at least one process model.

The process application along with the related configuration data may be deployed to a process engine, whereby the process engine is arranged to await control signals such as the triggering of a start event in a process application, and is wherein the process engine is further arranged to create a process instance from the process application and in dependence of the configuration data in response to such a triggering of a start event. The configuration data may comprise details regarding the generation of a process application from a process model, for instance configuration of forms, process roles and/or other relevant objects or parameters.

According to an embodiment, the method further comprises executing the process instance until an end event is reached. In an embodiment, the process instance is created and executed according to a process model. According to an embodiment wherein the process instance comprises more than one on-going thread of execution, each thread is executed until a respective end event of the comprised process model, e.g. in the form of an end event object of a process model object graph, is reached.

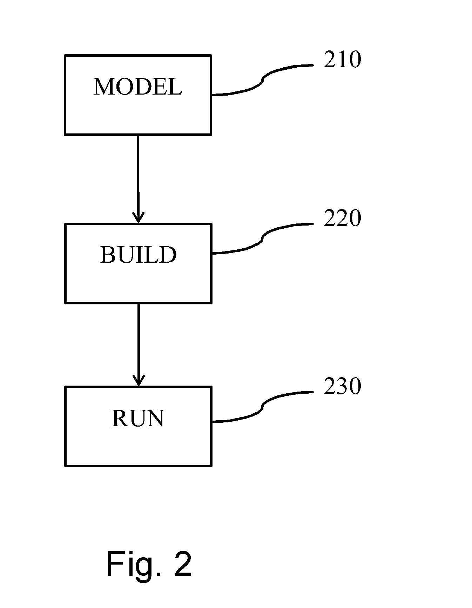

Embodiments of process management methods or information handling related to the methods are presented below in connection with Figs. 2, 3 and 6.

Fig. 2 is a flow diagram showing process management steps according to an embodiment, comprising:

Step 210: Model, or in other words create a process model or a map.

According to an embodiment, a user having the role of a process modeler creates a process model using a tool based on Business Process Model and Notation (BPMN), which is an industry standard graphic notation for representing business process workflows. The model may be represented as a sequence of flow objects in a flow diagram.

According to an embodiment, the process modeling tool used enables collaboration and sharing of created process models, tasks and workflows with other users.

In order for the created model to be executable, it must be deployed as a process application in step 220.

Step 220: Build, or in other words generate or deploy a runnable or executable process application based on the process model.

According to an embodiment, Step 220 comprises building and deploying a runnable or executable process application that can create process instances in response to triggering of a start event in the process application. According to an embodiment, a process instance is a specific end-to-end execution of a process model. For example, "Onboard new employee John Doe" could be a process instance of a "New employee onboarding" process model. Each process instance is executed within the scope of a process application that is the execution environment for a deployed runnable process model.

This step enables the concept map to app, or in other words generating an executable application (app) based on the created process model (map). Thereby, an executable application based on the created process model is achieved in a very intuitive way, requiring a small amount of input from a user using a graphical user interface. According to an embodiment, the generation of an executable application is achieved through the user interacting with interaction devices 180 one or a few times.

According to an embodiment, the process model represents an implementation of a predetermined set of business rules, or integrates a line of business services and data.

Step 230: Run, or in other words execute the executable process application.

According to embodiments, the process application is executed as native BPMN, meaning that no interpretation by intermediate applications, hardware or software is needed. According to this embodiment, the process model is instead interpreted continuously by the process engine through an process model object graph that may have been parsed in an earlier fully-automated step. In an embodiment, the process model object graph provides a machine-interpretable representation of the complete end-to-end business process described in the BPMN process, including sub-processes.

According to an embodiment, the application can create process instances in response to triggering of a start event in the process application. According to an embodiment, updates or modification done to the process model leads to generation of a new executable process application. In embodiments further described below, a process engine 703 creates and activates a process instance in response to triggering of a start event for an event handler in a process application.

According to an embodiment, the application is executed on a local unit 130, 140, and displayed to a user of the local unit on a display 132, 142. According to an embodiment, the local unit may be handheld and/or mobile.

Below is an exemplary use case describing the map to app concept for an invoicing process. According to the example, in Step 210 a user creates a process model, the process model being a sequence of flow objects modeled using a tool based on Business Process Model and Notation (BPMN). Thereafter, the user provides input to a graphical user map to app interface to create an application based on the model. According to an embodiment, the user provides input by using a button, a keyboard, soft buttons and/or touch screen input devices or another interactive input device or interaction device connected to the user interface. In response to the user providing input using an input or interaction device, a build start event is triggered in the form of a control signal, e.g. via an application programming interface (API), and the building step 220 is performed by the system. Thereby, the user is provided with an invoicing application that may be used for generating invoices. Each time the user uses, or executes, the application by triggering a build start event in step 230, a process instance, for example in the form of an invoice, is created. Each invoice, or process instance, is created according to an end-to-end subpart of the process model. The application is further continuously updated in response to updates and changes of the process model. For example, the user or another user may change or update the process model using the tool based on Business Process Model and Notation (BPMN) available through the graphical user interface and provide map to app input, or build input, whereby a new executable process application is generated.

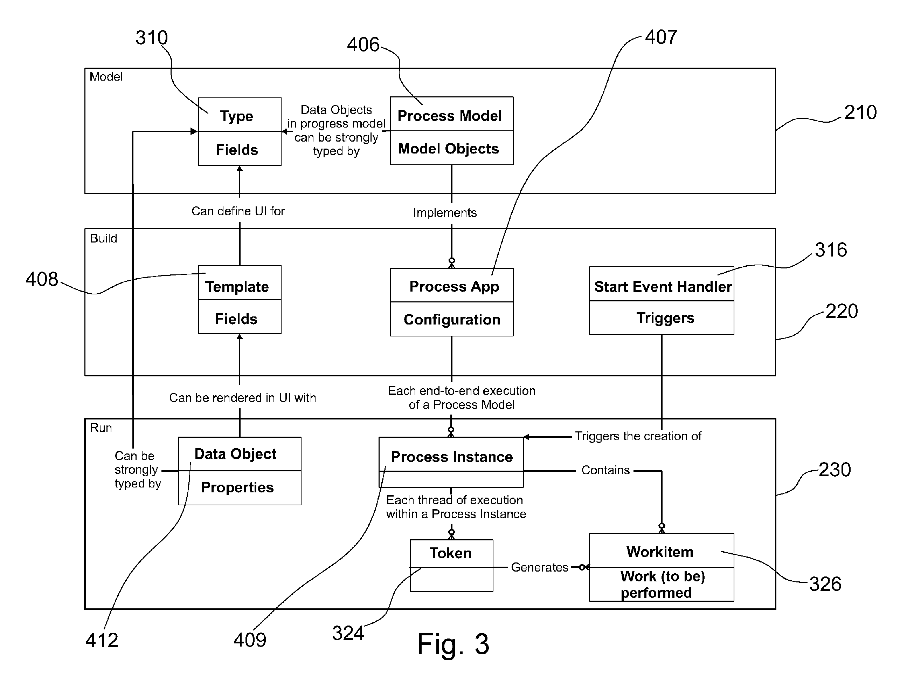

Fig. 3 shows data coupled to the process management steps of Fig. 2.

According to embodiments shown in fig. 3, data or information used in model step 210 may comprise:
- one or more process models 406, comprising model objects, wherein each process model 406 can contain Data Objects that can be strongly typed, or in other words strictly defined, by types 310;
- information entity types, referred to as types 310, comprising fields. Examples of types 310 can be a "Customer", an "Invoice", a "Product" or the like that the process modeler or user wants to handle in the process. Examples of fields in the "Customer" type can be "Customer id", "Customer name" and "Customer phone number". As person skilled in the art understands, these examples of types 310 are provided for illustrative purposes only and are not to be seen as limiting in any way.

According to embodiments, data or information used in build step 220 may comprise:
- zero or more templates 408, which may also be referred to as forms, form templates or object templates 408, comprising fields and defining the user interface for information entity types, referred to as types 310. An example of an object template 408 can be "Customer registration form" which can be used by an end-user to create a customer entity by filling in the fields in the object template 408. An example of a field in the "Customer registration form" can be a mandatory textbox field "Customer name";
- one or more process applications 407, each generated as an implementation of a process model 406 and having a defined configuration; and
- start event handlers 316 comprising triggers arranged to initiate a process instance 409 for the process model 406 that the start event resides in.

According to embodiments, data or information used in run step 230 may comprise:
- one or more data objects 412, corresponding to the objects 412 described in connection with Fig. 4, the data objects 412 comprising properties, and wherein each data object can be rendered in a user interface (UI) by an object template 408. Each object 412 can be strongly typed, or in other words strictly defined, by a Type 310;
- one or more process instances 409, wherein each process instance 409 represents an end-to-end execution of a process model 406 or a subset of a process model406, each end-to-end execution also being referred to as a thread of execution, wherein the generation or creation of a process instance 409 is triggered by a trigger of a start event handler 316;

According to embodiments, each process instance 409 comprises data objects 412 and work items 326, representing work or activities to be performed. According to an embodiment, each process instance 409 comprises for each thread of execution a token 324, indicating the current active work item 326 or work items 326 of the process, or workflow. In other words, the token 324 represents an on-going thread of execution in the process. The token 324 flows around in the process model 406, e.g. moving from flow item to the next, and the move triggers a generation of different types ofwork items 326, such as tasks and sub processes. The token 324 is routed through gateways, enables intermediate events and also ends execution of the current thread of activity or a whole process instance 409 if it enters an end event. Tokens 324 can be split and merged by gateways throughout the process which can result in many threads of execution going on at the same time in different parts of the process.

### Further details of embodiments

In more detail embodiments of the invention comprises the following.

### Method M1:

Fig. 7 shows a schematic view of interaction between system units of a computer implemented system of managing an executable process application according to an embodiment. An exemplifying embodiment of a method for generating runnable or executable process applications from process models, involves the following high-level steps, wherein the high-level steps are performed by the system units shown in Fig. 7:

In step 2, a process engine 703 receives a control signal via an application programming interface (API) 702, which has in turn received input from either a user interface 701 or an API client 706 in step 1. The received control signal triggers the process engine 703 to generate a process application from a process model, wherein the process model may be received by, retrieved by or accessible to the process engine 703.

According to an embodiment, the control signal is created in response to input provided by a user interacting with the user interface 701. According to another embodiment, the control signal is created in response to input from the API client 706 that is generated and sent to the API 702 after a predetermined criteria has been fulfilled, for example input of a control signal or triggering event information to the API client 706, or fulfillment of one or more predetermined logic rules.

According to an embodiment, the process engine 703 fetches a process model from a model repository 704 that is communicatively coupled to the process engine 703, in response to a received control signal. According to an embodiment, the process engine 703 fetches a process model from the model repository 704 by sending, in step 3, a request to the model repository 704, based on the received control signal, and receiving, in step 4, the process model from the model repository 704 in response to the sent request.

In step 5, a model parser 705, integrated in or communicatively coupled to the process engine 703, is invoked by the process engine 703 to parse the process model to generate an process model object graph of main elements of the graphical notation such as flow objects, connecting objects, artifacts, swim lanes and process participants. According to embodiments, flow objects may be elements representing process steps of the types events, for example activities and gateways, connecting objects may be lines representing process flow of the types sequence flows, message flows and/or associations, artifacts may be documentation and data, swim lanes may be pools and lanes dividing the steps in the process between different acting parties and process participants may be objects that represent different process roles.

According to an embodiment, for each sub-process model object, parsing is performed recursively by the model parser 705 and the result is injected into the generated process model object graph. According to an embodiment, for all model objects, parse attributes from the process model are based on the object type. All objects will be initialized with unique IDs from the process model. The IDs are used to load specific objects and also as a location identifier, which is used to exactly define where in the process, i.e. to which object in the process model object graph a token is located, when running the process model (see method M2). According to an embodiment, the parsed model is transferred to the process engine 703 in step 6.

According to embodiments, the process engine 703 validates the process model against a set of validation rules for runnable processes, for example the existence of at least one start event, the existence of at least one process participant and/or that all flow objects involving user interaction has at least one participant configured.

If the model does validate, the process engine 703 generation of an executable process application by creating a process application object with reference to the current process model version.

If the model does not validate, the user is informed, for example through the user interface 701, and any application generation initiated by the process engine 703 is aborted.

According to the embodiment wherein the model has validated, the process engine 703 identifies all start events in the process model and registers event handlers for each start event based on the respective start event trigger, such as message listeners, timers, rule evaluators and handlers for manually trigged events.

According to an embodiment, the process engine 703 starts the process application and activates all registered event handlers for all start events. The application is now running and can be triggered by triggering one of its start events, unless the application is stopped. If a start event handler is triggered then a new process instance is created and a token is created and placed on or associated to the triggered start event, see method M2 for the method for interpreting, triggering and running, or executing, BPMN process models. If the process application is stopped then all event handlers in the process application are deactivated and no start events can be triggered. Existing process instances are not affected.

According to an embodiment, the process engine 703 maps explicit users and/or user groups to all different process participants, or process roles. In an embodiment, the mapping is based on configuration data in the process application that exactly describes which users and/or user groups that can act as a specific process participant.

According to an embodiment, the process engine 703 maps process-aware form templates, also referred to as process-aware object templates, to data objects to provide a user interface for users to create, view, update and delete structured data in process instances. In an embodiment, the mapping is based on a configuration in the process application that exactly describes which form or object templates that shall be used when creating and/or updating a data object in the process model.

According to embodiments, a process-aware form or object template is a template that can use contextual information about in which process step or steps a form is used, determined by the location of the current token associated with the current object in the process model object graph, which user is using the form, which state the form is in, determined by the state property on the form data object, which view mode the form should be displayed in in the current process step and/or which other data objects exist in the process instance.

### Method M2:

An exemplifying embodiment of a method for interpreting, triggering and running (executing) BPMN process models, involves the following high-level steps:

The method addresses the inherent asynchronous, asymmetric and complex nature of BPMN and how correct execution of BPMN process models can be accomplished using the method, with minimal complexity and maximal scalability.

The execution of a BPMN process model always starts when one of its process applications start events is triggered. When this happens, a token is generated and placed on the start event, e.g. by associating the token to the start event object of the process model object graph, representing an on-going thread of execution in the process. The token flows or moves around in the process model and the move generates different types of work items, such as tasks and sub processes. The token is routed through gateways, enables intermediate events and also ends execution of the current thread of activity or the whole process instance if it enters an end event. Tokens can be split and merged by gateways throughout the process which can result in many threads of execution going on at the same time in different parts of the process.

The Method M2 introduces and uses the concept of element managers:

Each type of BPMN Process Model flow object has its own element manager implementation which contains encapsulated logic tailored to the specific BPMN symbol.

All element managers inherit from a common abstract element manager which defines the common behavior for all element managers. In particular, all element managers must implement the function InsertToken(Token) which contains contain the logic for receiving a token from an upstream process execution thread or from the triggering of a start event handler. In one example a token is moved from a previously processed flow object. i.e. upstream, to the succeeding flow object, connected to the previously processed flow item with a connecting object, by a processing engine 703.

Every element manager acts independently and is unaware of the upstream and/or downstream process. Only the current flow object, its configuration and in-/outgoing connecting objects are accessible, which means that the complexity of executing the process is greatly reduced and that execution can take place in parallel by using multiple threads of executions following the creation of multiple tokens in a process instance.

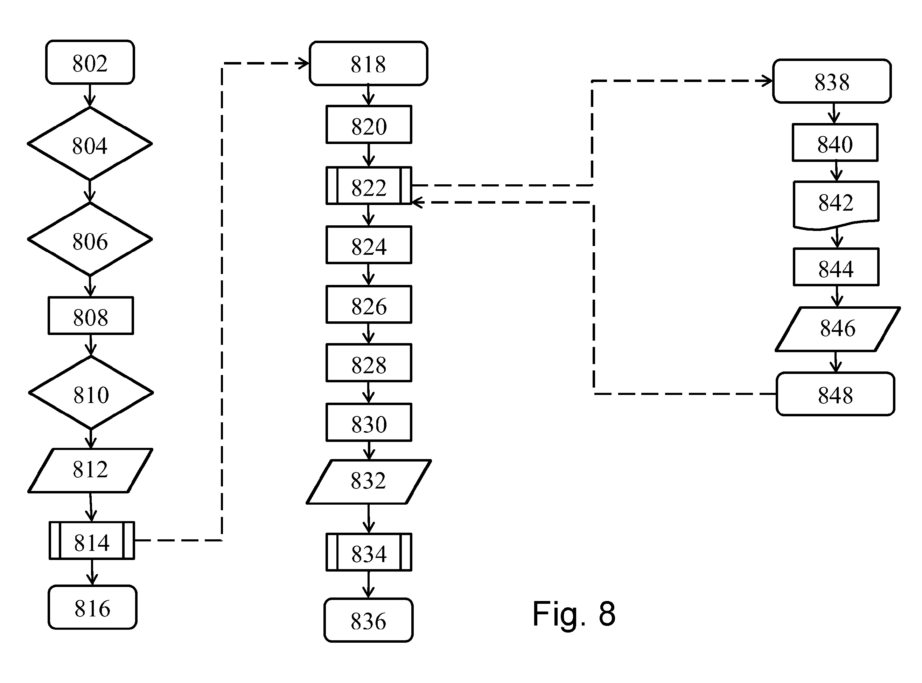

Fig. 8 is a flow diagram showing an interpretation flow according to embodiments.

802 is a start event, or signal, which triggers the start of a new interpretation flow, wherein the processor 160 or the processing engine 703 is triggered to run/execute a BPMN process model is in a process application.

In step 804, the process engine 703 performs a check and makes a decision on whether a process application has been started. If the process application is found to be started, the process engine 703 further performs a check and makes a decision on whether at least one active start event handler is active in step 806. According to the embodiment wherein at least one active start event handler is found, the process engine 703 identifies matching event handlers in process step 810 and creates start event handler references 812. Thereafter, in process step 814, the process engine 703 creates and activates a process instance for each identified start event handler reference 812.

816 is an end event, or signal, that represents the end of the current interpretation flow, e. g process model object graph.

According to embodiments, step 814 further triggers a start event or signal 818, whereby a new interpretation flow is initiated and a new process instance is created and activated.
1. Embodiments of the interpretation flow of Fig. 8 correspond to the description of points 1-3 below. The remaining steps of Fig. 8 are presented below in connection with points 3.1 to 3.6.1.3.4.GIVEN THAT a process application is started AND that at least one start event handler is active
2. WHEN a signal for the triggering of a start event is received by the process engine 703 via the API 702 from either the user interface 701 or an API client 706.
3. THEN the process engine 703 identify matching start event handlers for the signal by comparing the event trigger OR specific event id AND/OR named message for message events (multiple may apply) and for each matching start event handler:
   3.1. The process engine 703 loads the start event handler in step 820.
   3.2. The process engine 703 loads and parses the process model to an process model object graph in step 822 by invoking the model parser 705.
      According to embodiments, loading and parsing of step 822 may trigger a start event or signal 838, whereby a new interpretation flow is initiated and a new process instance is created and activated. In step 840 the specified version of the BPMN process model document 842 is loaded from the model repository 704, and in step 844 parsing the BPMN process model to a BPMN process model object graph 846. Thereafter, the parsing is completed and the parsed process model object graph is returned to the main load and parse step 822. 848 is an end event, or signal, that represents the end of the current interpretation flow.
      Parsing of a process model to an process model object graph is further described in Method M1 presented in connection with Fig. 7.
   3.3. In process step 824 the process engine 703 uses the data in the start event handler loaded in step 820 to create a process instance, which will represent the end-to-end execution of the BPMN process model from the triggered start event to an end event.
   3.4. In step 826, the process engine 703 automatically creates a first token and set its location to the ID of the triggered start event in the process model.
   3.5. Thereafter, in step 828, the process engine 703 automatically activates the process instance by setting its status to active.
   3.6. In step 830, the process engine 703 loads the element manager 832 for the triggered start event and inserts the created token to an element manager in step 834, according to an embodiment using the InsertTaken(Taken) function.
      According to embodiments, step 834 of inserting a token to the element manager comprises the following sub-steps (not shown in the figure):
      3.6.1. Whenever a token is inserted into an element manager:
         3.6.1.1. Update the token's location attribute to the ID of the current flow object.
         3.6.1.2. Perform the work defined by the logic in the specific element manager and by the configuration on the flow object in the BPMN process model. Work can include sending messages, creating mandatory/optional work items for asynchronous execution, scheduling timer execution, terminating the token or the whole process instance etc.
      3.6.1.3. Check if all mandatory work items are completed, and if so move the token by getting all outgoing flow connecting objects and evaluate any conditional expressions that might exist on the flow connecting object and if more than one flow connecting object without expression or with an expression that evaluates to true exists then for each matching flow connecting object:
         3.6.1.3.1. Split, or clone, the token into as many tokens as there are matching flow connecting objects
         3.6.1.3.2. Load the element manager for each flow connecting object and insert each token into each element manager.
         3.6.1.3.3. Continue interpretation on step 3.6.1 until there are no more active tokens in the process instance.
         3.6.1.3.4. If there are no active tokens in a process instance then it is considered completed and the status of the process instance will be changed to completed.
836 is an end event, or signal, that represents the end of the current interpretation flow, e.g. on-going process execution thread

### Example of system architecture of an embodiment of the invention

Fig.4 shows an example of a system architecture for a process manager 550 comprising a process engine 703 operating with processes or process models 406, process applications 407, forms or object templates 408, one or more process instances 409, a predetermined information model 410 and objects 412. The objects 412 may be predetermined objects, for example controlling objects linked to the process models 406, or objects generated as output when a process instance 409 is executed. The process server further comprises one or more low-level APIs 702 adapted for communication with other functions of the system. The process manager 550 corresponds according to embodiments to the process server 110 shown in Fig. 1.

The functions of the process manager or server operate for example against one or more business systems and structured or unstructured content of data collections related to the business system, for example, , line of business data 418, also referred to as databases 418, and line of business systems 420. According to an embodiment, a line of business system may be a document management system.

In an embodiment, the process manager 550 comprises one or more identity providers 414, which enable authentication and login functionality for logging into the process manager 550 via a sign-on procedure and an authentication adapter. The identity providers 414 may receive or retrieve identity information related to a user account from an internal memory or database of the process manager 550 (not shown in the Figure), or from an external memory or database connected to or communicatively coupled to the process manager 550.

Parts of the communication between the process engine 703 and business systems is performed via one or more connectors 422 of the process manager 550. According to embodiments, the one or more connectors 422 may for instance comprise a selection of the following: a directory adapter, metadata adapters and/or business components, optionally coupled to the process manager 550 or process engine 703 via an enterprise service bus. Examples of such communication comprise a selection of: sending and receiving messages, evaluating business rules, control signals or control commands for invoking external systems and custom process logic, all performed by the process engine 703. In other words, in embodiments the process engine 703 is configured to perform a selection of the following; send and/or receive messages; send, receive, retrieve and/or evaluate business rules; send, receive and/or evaluate control signals or control commands for invoking external systems and custom process logic. According to an embodiment wherein the process engine is communicating with systems or components external to the system 100, the process engine 703 is configured to initiate such communication via one or more connectors 422. If the communication is performed within the system 100, the communication may be performed with or without one or more connectors 422.

On the client side, clients operate against the process engine 703 via a data communications network by means of an API 702, for example a REST web API. and user interface 701, for example a web user interface (UI) framework. Optionally the process manager or server comprises a user interface 701, for example in the form of a web user interface plug-in, which communicates with the process engine 703 via an API 701. So for example, the clients may be presented with a user interface on a client device 442, for example being represented as a general computer 442, on a client device 444, for example being represented as a handheld computer 444 such as a smartphone, or via a client device 446, for example being represented as a communication portal 446, such as a share point server. As is readily understandable to a person skilled in the art, one or more client devices 442, 444, 446 or one or more of any other suitable type of client device may be communicatively coupled to the process manager or server 550.

According to embodiment, the process manager 550 further comprises a model parser 705. The API 701, the user interface 702, the process engine 703 and the model parser 705 are described further in connection with Fig. 7.

### Integration agent

According to embodiments, there is provided an integration agent. The integration agent is a functional unit that is event driven based on predetermined rules.

An integration agent monitors a local data source, e.g. a database, a file, a folder, a message queue, an email folder or an API, locally at a client or end user.

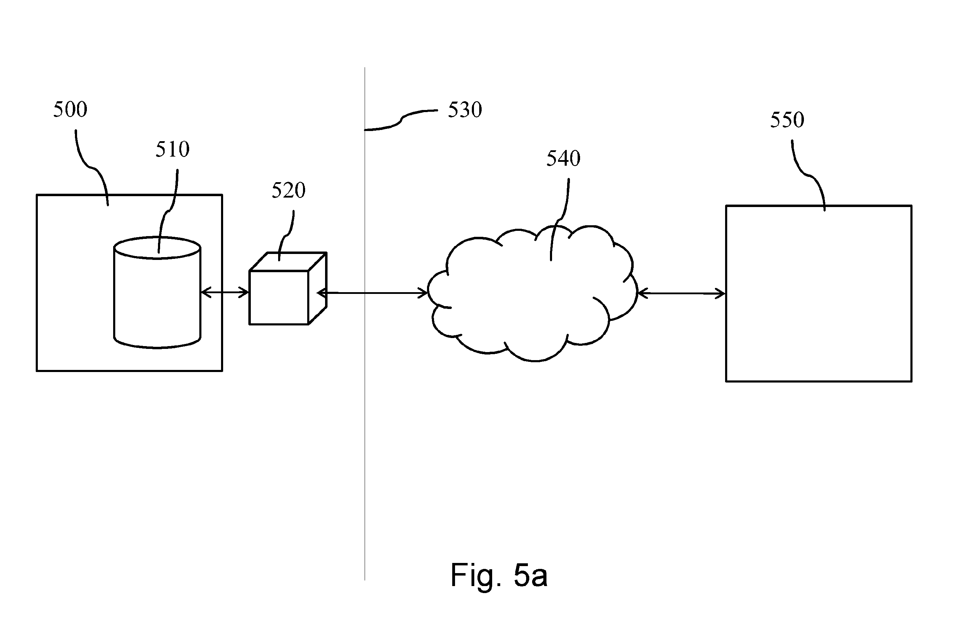

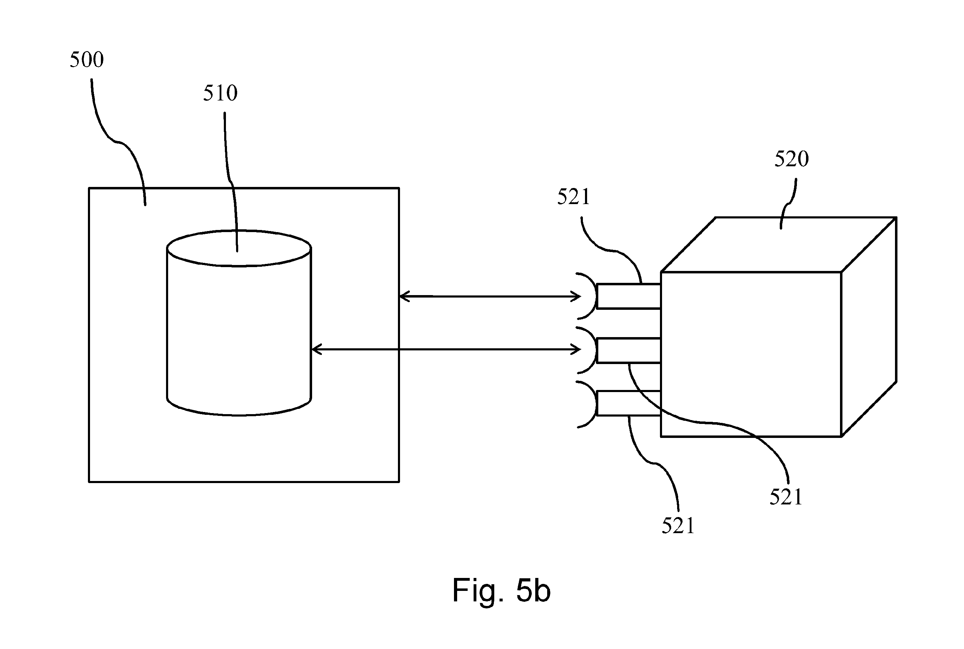

In Fig. 5a, a schematic view of a system embodiment comprising an integration agent is shown. Fig. 5b shows a detailed schematic view of a part of the system in Fig. 5a, according to an embodiment.

The system embodiment of Fig. 5a comprises a local system 500, wherein a data source 510 is integrated into or coupled to the local system 500. The system of Fig. 5a further comprises an integration agent 520 that is adapted for two-way communication with the local system 500 as well as with a communication network, or cloud, 540. According to an embodiment, the integration agent 520 is arranged to enable communication with the network or cloud 540 through a firewall 530 implemented on the local system. During use, the integration agent 520 authenticates itself against, or logs into, the local system or network 500 communicatively coupled to the system. The integration agent 520 may have support for the protocol or protocols used for communication, information transmission etc. with the local system and/or network 500. According to an embodiment, the communication and/or information transmission is performed via one or more connectors 521, as illustrated the detailed view in Fig. 5b. Additional connectors 521 can be installed in the integration agent 520 at any time, dependent on the circumstances such as the requirements of the system. After authentication or login, the integration agent 520 monitors the local data source 510 comprised in the local system, based on predetermined rules or logic for instance stored in a memory of the integration agent 520, using queries or calls that are sent to the local data source 510.

According to embodiments, queries, questions or calls sent by the integration agent 520 may be related to changes or updates of the local data source 510.

According to embodiments, the integration agent 520 may be comprised of software, hardware, firmware or any combination thereof.

According to an embodiment, the integration agent 520 comprises computer code portions installable on, and executable by, a hardware unit comprised in the local system 500, for example a server of the local system 500.

According to an embodiment, the integration agent 520 is an appliance comprising computer code portions installed on and executable by an external hardware unit which is adapted to be coupled or connected to the local system or network 500.

According to an embodiment, the integration agent 520 transmits a question, query or call to the local data source 510. The questions, query or call may be transmitted via a connector 521 that implements the integration protocol for - and performs the actual communication with - the data source 510. See Fig. 5b for illustrational examples of connectors 521. Thereafter, a response/an input signal/retrieved data is received in the integration agent 520 from the local data source 510 via the connector 521. The response/input signal/retrieved data is compared against the predetermined rules.

If one or more predetermined rules are fulfilled (change or update found e.g.), the integration agent 520 sends a call or query or transmits a control signal to the process manager 550, via the network or cloud 540. The call, query or control signal may be sent or transmitted via the API 702. In response to a received call/query/control signal, the process manager 550 may according to different embodiments start up a process, modify a process, update data, send a message or the like, according to a predetermined set of rules relating to the current process model or process instance. The process manager 550 may according to embodiments correspond to the process server 110 shown in Fig. 1. According to an embodiment, the current process is through the logic of the process engine 703 listening to the call/query/control signal received via the network or cloud 540, and the target process application is triggered or the target process instance is triggered, e.g. by means of a an event trigger, updated, modified etc. according to the predetermined set of rules. All such actions applied to a process application or a process instance are also in real time, or near real time, displayable in the graphical user interface (GUI) presented on the display 150, as well as in the application GUI presented on the display of a local unit 130, 140.

### Use case integration agent

According to a use case embodiment, a process describing handling of invoices to clients is provided. According to the use case embodiment the local data source is updated with information that a client has paid his/her debt. The logic/set of rules includes a rule relating to checking for updates regarding the payment status of clients listed in the local data source. Therefore, the integration agent sends a query to the local database and retrieves updates in payment status. The updated status triggers a control signal to the process, leading to cancellation of the process step send reminder. In other words, events, changes or status updates in the local data source triggers events in a process application or triggers events or modification of a process instance in real time or near real time.

### Overview of process management method

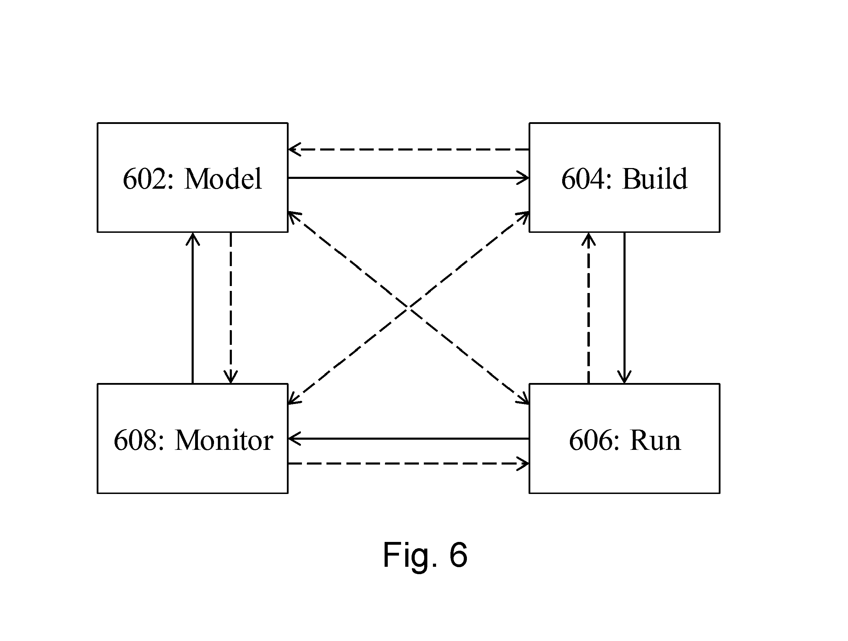

Fig. 6 shows an overview of a process management method according to the inventive concept.

According to an embodiment, the user of a process application is presented with an interactive user interface 701 presenting a "map to app" guide for a set of general functions supported by the application. Preferably the functions are named Model, Build, Run and possibly Monitor. The guide shows a symbol of the functions and activates the symbol of the function that the user stands before, is currently in or should enter into in order to guide and prompt the user to enter a control command to go to that function. The application enters a specific user interface and activates application functionality coupled to the function in response to receiving an activating control command from the user.

At a first stage 602 in a function e.g. called Model, a user models her business process according to the standard BPMN in a graphical user interface with tools and drag-and-drop functions. This comprises BPMN process modeling, information, collaboration and sharing. When a change to a process is to be introduced the user enters this stage again and makes her changes to the process model as if it was making a new model. Through the modeling stage 602, changes and updates of the process are easily performed if necessary.

At a second stage 604 in a function e.g. called Build, the system creates applications and automates work flows. The workflows may for instance relate to document governance, collaboration and presentation and/or business process management. This comprises building and deploying one or more executable process applications, designing process-aware forms, implementing business rules and integrating line of business services and data. This is performed according to the description above and in response to an activation of the Build function in response to a control command from the user in either the user interface 701 or an API client 706, for example a click on a command button.

At a third stage 606 in a function e.g. called Run, the process application executes and runs the process and the process instances in an event and rule driven fashion as described above. This comprises running code generated based on a BPMN description of a process, the application presenting activity workbenches to users on client interfaces such as web applications and/or mobile applications. Activities may relate to actions to be performed using for example word processor applications, document reading or editing applications, calculation or spreadsheet applications, or email application. The run stage may be referred to as being work process-driven.

At a fourth stage 608 in a function for example called Monitor, the process application supports monitoring process activities and performance presented to a user via a monitoring dashboard. The monitoring dashboard presents real-time process activity based on key indicators and produces continuous reports. Through the stage 607, a user is enabled to manage and improve the performance of the model and the BPMS.

The solid arrows in Fig. 6 indicate one typical order in which the stages are entered and performed. However, the user can at any time move between the stages, as indicated by the dashed arrows in Fig. 6. According to an embodiment, navigation possibilities in the form of for instance selectable icons or menu option relating to the functions of stages 602 to 608 are visually realized in a graphical user interface 701. According to an embodiment, the user is enabled to interact with the graphical user interface by using one or more of the input or interaction devices 180 and/or an API client 706.

## Claims

1. A computer implemented method of managing an executable process application based on a process model based on graphic notation for representing business process workflows, comprising:
- receiving a process model based on graphic notation for representing business process workflows;
- parsing the process model to an process model object graph, wherein the process model object graph is a machine-interpretable representation of a complete end-to-end business process model;
- validating the process model dependent on a predetermined set of validation rules;
- identifying start events in the process model, wherein identifying start events comprises identifying objects in the parsed process model object graph that corresponds to the start events in the graphical notation of the process;
- providing an event handler for each start event based on a start event trigger comprised in the process model, wherein event handlers are triggered by one of receiving a message, expiry of a timer, rule evaluators or manual events;
- generating an executable process application based on the process model object graph.

2. The method of claim 1, further comprising:
creating an executable process instance based on a subset of the process model in response to triggering of a start event handler.

3. The method of the preceding claim, further comprising:
executing said process instance until an end event is reached, wherein executing comprises interpreting the parsed process model object graph until an end event object in the process model object graph that corresponds to an end event in the graphical notation of the process is reached.

4. The method of the claim 2, wherein said process instance comprises more than one on-going thread of execution wherein each thread is executed until a respective end event is reached.

5. The method of claim 1, further comprising:
generating a graphical user interface that is displayed on a local unit to present information to a user and receive control commands from the user in communication via a data communications network.

6. A computer implemented system of managing an executable process application based on a process model based on graphic notation for representing business process workflows, comprising a process server provided with:
A user interface adapted for inputting a BPMN process model;
A process engine adapted to:
- receive a BPMN process model;
- parse the process model to an process model object graph, wherein the process model object graph is a machine-interpretable representation of a complete end-to-end business process model;
- validate the process model dependent on a predetermined set of validation rules;
- identify start events in the process model, wherein identifying start events comprises identifying objects in the parsed process model object graph that corresponds to the start events in the graphical notation of the process;
- provide an event handler for each start event based on a start event trigger comprised in the process model, wherein event handlers are triggered by one of receiving a message, expiry of a timer, rule evaluators or manual events;
- generate an executable process application based on the process model object graph.

7. The system of claim 6, wherein the process engine is further adapted to:
create an executable process instance based on a subset of the process model in response to triggering of a start event handler.

8. The system of the preceding claim, wherein the process engine is further adapted to:
execute said process instance until an end event is reached, wherein executing comprises interpreting the parsed process model object graph until an end event object in the process model object graph that corresponds to an end event in the graphical notation of the process is reached.

9. The system of the claim 7, wherein the process engine is further adapted to:
- provide said process instance to comprise more than one on-going thread of execution; and
- execute each thread until a respective end event is reached.

10. The system of claim 6, wherein the process engine is further adapted to: generate a graphical user interface that is displayed on a local unit to present information to a user and receive control commands from the user in communication via a data communications network.

11. The system of claim 6, further comprising:
- an integration agent being set up to monitor a local data source and being communicatively coupled to said process server;
- said integration agent being adapted to retrieve data from the local data source and to communicate retrieved data to the process server in response to predetermined events and dependent on predetermined rules.

12. The system of the preceding claim, wherein the process engine is further adapted to:
- execute said process application and/or a selection of process instances dependent on data received from the integration agent and according to predetermined rules.

13. A computer program product of managing an executable process application based on a BPMN process model, comprising computer program code portions adapted to control a processor to perform the steps and functions of any of the preceding method or system claims.
